# EUROPEAN PATENT SPECIFICATION

(11) **EP 3 085 561 B1**
(45) Date of publication and mention of the grant of the patent: **14.08.2019**
(21) Application number: 16166330.7
(22) Date of filing: 21.04.2016
(51) Int. Cl.: B60J 5/04, B60J 5/06

(54) **SIDE PANEL CONSTRUCTION FOR A CURTAIN SIDED TRANSPORT VEHICLE, A CURTAIN SIDED TRANSPORT VEHICLE AND A METHOD FOR LOADING/UNLOADING SAID CURTAIN SIDED TRANSPORT VEHICLE**
SEITENPLATTENKONSTRUKTION FÜR EIN SEITENPLANENTRANSPORTFAHRZEUG, SEITENPLANENTRANSPORTFAHRZEUG UND VERFAHREN ZUM BELADEN/ENTLADEN DES BESAGTEN SEITENPLANENTRANSPORTFAHRZEUGS
STRUCTURE DE PANNEAU LATÉRAL POUR UN VÉHICULE DE TRANSPORT À RIDEAU LATÉRAL, VÉHICULE DE TRANSPORT À RIDEAU LATÉRAL ET PROCÉDÉ DE CHARGEMENT/DÉCHARGEMENT DUDIT VÉHICULE DE TRANSPORT À RIDEAU LATÉRAL

(30) Priority: 23.04.2015 NL 2014698
(43) Date of publication of application: 26.10.2016
(73) Proprietor: Vos Logistics Breukelen B.V., 3621 LP Breukelen (NL)
(72) Inventor: VAN SCHAIJK, Johannes Arnoldus Wilhelmus Antonius, 3621 LP BREUKELEN (NL)
(74) Representative: Algemeen Octrooi- en Merkenbureau B.V.

(56) References cited:
- DE-C1- 10 145 000
- GB-A- 2 145 040
- GB-A- 2 174 136
- GB-A- 2 402 112
- NL-A- 8 800 228
- US-B1- 6 554 347

## Description

The invention relates to a side panel for a curtain sided transport vehicle. The invention also relates to a curtain sided transport vehicle comprising such a side panel construction. The invention further relates to a method of loading or unloading such a transport vehicle.

Two common types of transport vehicles such as trucks, trailers and semitrailers, are the closed box type and the curtain sided type, also known as tautliner or curtain sider. Closed box transport vehicles have rigid weather sealed walls, fully enclosing the load, and a rear door for loading and unloading. Curtain siders have curtain side walls that can be folded away for easy loading and unloading from the sides, for instance using fork lifts. Curtain sided trailers typically have a horizontal floor for carrying load, provided with vertical poles positioned the sides of the floor to support the roof of the trailer. Similar to closed transport vehicles, the curtain siders usually also have a rear door which may also be used for loading and unloading. In order to protect the load from weather influences, the sides of the semi-trailer may be covered with a sheet material, which may be arranged as a horizontally or vertically displaceable curtain. The curtain, typically made of PVC vinyl or canvas, spans the sides, or multiple overlapping curtains may be used to span parts of the sides. Curtain rollers enable vertical curtains, whereas rails may enable horizontal curtains. During transport, the curtains are secured using curtain tensioners. The curtain sides may have reinforcements such as metal or plastic strips, in order to control the shape of the curtain side with respect to air fluctuations due to wind and/or vehicle speed.

Closed transport vehicles have the advantage over curtain siders that their side walls are rigid, and are better at controlling the position loose items transport. In contrast, loose items in curtain siders may be pushed against the curtain walls during transport, and may shift outside the limits of the load floors. This may lead to load bulging outside of the limits of the loading floor, damage to the curtain and potentially invokes traffic hazards. Another disadvantage of curtain sided trailers is that the curtain walls may be easily cut with a knife, increasing the risk for theft. However, curtain sided transport vehicles offer more flexible loading and unloading options. Whereas closed transport vehicles usually may only be loaded and unloaded through the limited opening provided by the back doors, curtain sided transport vehicles may be unloaded from all sides, and for vehicle types with removable roofs, also from the top.

EP 2,522,537 B1 discloses a side panel construction for a curtain sided transport vehicle, comprising a relatively lightweight panel suitable for fixing the panel between two adjacent posts fixed to the floor of a transport vehicle, which provides additional mechanical strength to contain the load within the boundaries of the floor of the trailer. The panel is provided with coupling means at opposite sides of the panel for coupling the panel between two adjacent posts of a curtain sided transport vehicle. The panel also protects the curtain from being damaged by the load from the inside, and in addition provides an additional obstacle for thieves attempting to gain access to the load from the outside. Due to the low weight, the panels may be placed and removed by a single person. Drawback of the side panel construction of EP 2,522,537 B1 is that the loading of large, particularly long, objects is cumbersome. For example, objects with a width larger than that of said panel cannot effectively be loaded.

A curtain sided transport vehicle according to the preamble of claim 1 is disclosed in US 6,554,347 B1.

It is an object of the invention to facilitate improved loading and unloading of a curtain sided transport vehicle. It is another object of the invention to provide for a curtain sided transport vehicle, and a corresponding method.

In a first aspect of the invention, there is provided side panel construction for a curtain sided transport vehicle, said side panel construction comprising a plurality of panels, each of which connected between two adjacent, in use substantially vertically oriented, subsequent posts of the curtain sided transport vehicle, wherein said side panel construction comprises an, in use substantially horizontally oriented, bar from which said posts extend,
wherein said posts comprise translation means arranged for engaging said bar such that said posts are moveable in a direction parallel to said bar, characterized in that each of said panels are pivotable around a pivoting axis substantially parallel to at least one of its connecting posts and around a pivoting axis substantially parallel to said bar, such that said panels can be joined together by moving said posts in said direction parallel to said bar. As such, said panels during use are arranged to pivot around a horizontal and vertical pivoting axis.

The advantage hereof is that a large part of the complete side of the side panel construction can be made accessible, i.e. open. A curtain sided transport vehicle comprising such a side panel construction can thus be loaded and unloaded via its large side opening. This save a lot of time, and it enables large, particularly long, objects to be easily loaded in, and out of the vehicle.

The panels further provide for an additional obstacle for thieves attempting to gain access to the load from the outside.

Typically, the bar is located at a top side of the vehicle, such that the posts are suspended from the bar, i.e. the posts extend from the bar downward. The translation means may comprise hooks, a guiding rail, a guiding connection, a sliding connection or the like moving the posts parallel to the bar.

At least the panels need to be pivotable around a pivoting axis, as otherwise they can not be joined together. When joined together, the panels are in a retracted, or stored, position, such that a large part of the side of the vehicle is made accessible. When the panels are in an extended, or closed, position, the side of the vehicle is closed, such that the cargo, i.e. load, in the vehicle is not accessible.

Each of the panels is connected between two adjacent, in use substantially vertically oriented, subsequent posts of the curtain sided transport vehicle. In order to make the panels pivotable around a pivoting axis parallel to at least one of its connecting posts, it is also conceivable that the at least one of its connecting post is pivotable as well. As such, the connection between the panel at the at least one of its connecting post does not necessary need to be pivotable. In case the post is rotating, or pivoting, around its elongated axis, i.e. around the pivoting axis, then the panel will pivot along therewith. This rotating movement of the post may be facilitated by the translation means connecting the post to the bar. Additionally the panel is pivotable around the horizontal bar. In a basic embodiment a post with a panel is able to pivot around the horizontal bar. The post and/or the panel is pivotably connected to the bar at its upper end, while its bottom end is free to pivot. Preferably only the top end of the post is connected to the bar, such that the panel is pivotable around the vertical post as well as the horizontal bar. Basically, the panels according to the present invention when in use are able to pivot out of the vertical plane. The top end of a post can be connected to only the upper bar while pivoting, whereas during transport the bottom end of this post is secured to the transport vehicle.

In an example, however, each of said panels comprise pivoting means for pivotably connecting said panel to said at least one of its connecting posts such that said panel is pivotable around said pivoting axis substantially parallel to said at least one of its connecting posts.

Here, the at least one of its connecting post thus does not rotate or pivot along its elongated axis, but the panel connected therefor pivots with respect to that connecting post, over the elongated, pivot axis.

In another example, each panel comprises two separate parts, wherein each part is connected to one of said two adjacent, in use substantially vertically oriented, subsequent posts, and wherein said two parts are arranged to be releasably secured to one another, wherein both parts are pivotable around a pivoting axis substantially parallel to its connecting post.

Here, a panel connected between two adjacently positioned, vertically oriented, posts resemble a saloon door, i.e. they may be opened somewhere in the middle, where the connection of the first part to its post, and the connection of the second part to its post, is pivotable around the pivot axis. Thus, the two parts ar releasably secured to each other in the middle, such that, when released, the two parts can both pivot with respect to each other.

In another example, each panel and/or each post further comprises releasable securing means, which, when engaged, are arranged to prevent said panel from pivoting around said pivoting axis.

These securing means may be arranged for releasably securing said panel when said panel is located in a plane determined by said posts and said bar. Thus, when the panel is located or oriented in that plane, the panel may be secured, i.e. locked, therewith providing a closed surface between the two adjacent posts connected to that panel.

The securing means may, for example, comprise a protrusion on a side of the post or the panel, which prevents the panel from pivoting through the plane determined by the posts.

The securing means may also comprise holding means arranged to, when engaged, extend over a surface of said panel and collaborate with said protrusion for securing said panel in a plane determined by said posts.

In another example, the side panel construction comprises an upper bar and a lower bar, wherein said posts extend between said upper bar and said lower bar, and wherein said posts comprise translation means at both ends of said posts for engaging said upper bar and said lower bar.

The upper bar and the lower bar may comprise a rail guide, or another type of guiding system, wherein said translation means arranged for slideably connecting said posts.

In a further example, each panel is lightweight, preferably having a weight of less than 25 kilogram. Sandwich materials combine a light weight per area with good mechanical strength to withstand forces perpendicular to the surface of the panel. Examples of sandwich material include honeycomb structures. The sandwich structures may be made of plastics, metal, cardboard and/or word, or combinations thereof. Preferably, the panel is made essentially of a single material, as this makes the panel easier to recycle.

In another example, each panel is dimensioned or provided with recesses to leave a gripping space between a side of said panel and said post for manual movement of said panel. This makes it relatively easy to move the panels, and the posts, sideways manually. The presence of the gripping space may provide an opening for weather or other external influences, but in general this is no disadvantage in a curtain sided transport vehicle, as the curtain will be placed around the sides to provide sufficient weather protection.

In a second aspect of the invention, there is provided a curtain sided transport vehicle comprising a side panel construction according to any of the above described example, said transport vehicle further comprising a removable sheet material arranged to cover at least the sides of the curtain sided transport vehicle in a closed position. The removable sheet material is provided with supporting strips. When the sheet material extends over said panels, these supporting strips run over the surface of the panels and in between the posts in the vertical direction, i.e. substantially parallel to said posts. The supporting strips in an embodiment comprise sheet securing means or strip securing means for fastening the bottom ends of these strips to the transport vehicle. The bottom ends of said supporting strips when in use can be secured to said transport vehicle, such that said supporting strips at least partially form said holding means for securing said panels. These strips prevent the panels from pivoting and provide added support for cargo pressing against the panels and/or sheet material. Preferably said supporting strips extend through said sheet material, such that when in use a first part of each supporting strips runs over the inner side of the sheet material and a second part runs over the outer side of the sheet material. The outwardly extending bottom ends of the strips can thus be easily secured to the transport vehicle.

In a preferred embodiment the removable sheet material is arranged to be translated and folded in the horizontal direction parallel to the bar. The said sheet material can thus be stored in a folded state preferably near the front or rear end of the said transport vehicle. This allows a user to easily slide the cover to a side of the vehicle. Preferably said supporting strips at least partially define the fold lines in the sheet.

In an example hereof, the coupling means are arranged to leave a vertical space of at least 15 cm, preferably at least 25 cm, between a lower bottom of said panel and a horizontal floor of the vehicle. Said coupling means can optionally comprise or be said pivoting means.

In a third aspect of the invention, there is provided for a method for loading or unloading a curtain sided transport vehicle according to the above described examples, the method comprising the steps of:
- providing said curtain sided transport vehicle, said vehicle comprising a horizontal floor for carrying a load,
- joining together one or more of said panels by moving said posts in said direction parallel to said bar and by pivoting said one or more panels around a pivoting axis substantially parallel to at least one of their corresponding connecting posts and around a pivoting axis substantially parallel to said bar;
- loading or unloading articles onto said floor,
- returning said joined together one or more of said panels by moving said posts in said direction parallel to said bar and by pivoting said one or more panels around a pivoting axis substantially parallel to at least one of their corresponding connecting posts and around a pivoting axis substantially parallel to said bar;
- covering at least the vertical posts and said panels attached to said posts with a removable sheet material, wherein a distance between adjacent vertical posts is adjustable by said translation means to correspond to the width of said panel.

The method according to the present invention further comprises the step of securing the bottom ends of said vertical supporting strips to said transport vehicle. In an additional step the removable sheet material can be slid in the horizontal direction, such that said sheet material is stored in a folded state.

In accordance with the present invention, different aspects applicable to the above mentioned examples of the side panel construction, including the advantages thereof, correspond to the aspects which are applicable to the curtain sided transport vehicle as well as to the method according to the present invention.

The above-mentioned and other features and advantages of the invention will be best understood from the following description referring to the attached drawings. In the drawings, like reference numerals denote identical parts or parts performing an identical or comparable function or operation.

The invention is not limited to the particular examples disclosed below in connection with a particular type of location server or with a particular type of mobile network.

### Brief description of the drawings

Figures 1a-b schematically show a side panel construction according to the invention in a closed and open configuration, respectively.
Figure 2 schematically shows a rear view of a curtain sided transport vehicle according to the present invention.
Figure 3 schematically shows a top view of a curtain sided transport vehicle according to the present invention.
Figure 4a-b shows a further embodiment of a side panel construction according to the invention in an closed and open configuration respectively.
Figure 5 shows a another embodiment of a side panel construction according to the invention in an open configuration.
Figure 6 schematically shows a side view of a curtain sided transport vehicle according to the present invention secured with sheet material.

### Detailed description of the drawings

The panels showed herein are for use in a curtain sided transport vehicle, and may be applied in various vehicles including trucks, trailers and semitrailers.

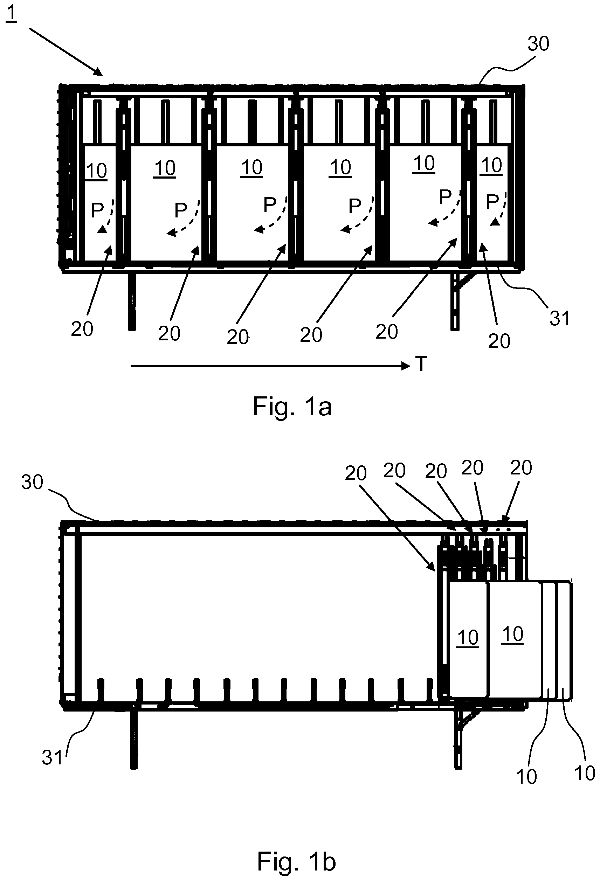

Figures 1a-b schematically show a side panel construction 1 according to the invention in a closed configuration. A plurality of panels 10 is positioned between adjacent vertically oriented, subsequent posts 20, which extend between a substantially horizontally oriented upper bar 30 and a substantially horizontally oriented lower bar 31.

The panels may comprise pivoting means which connect each panel 10 to a respective post 20. Said panel 10 is thus pivotable around a pivoting axis substantially parallel to said post 20. This pivoting motion is indicated by the curved and striped arrow P. Basically the pivoting means allow the panel 10 to pivot out of, or into a plane determined by said posts 20 and the upper bar 30 and the lower bar 31, which in Fig. 1 is the plane of the paper on which it is printed.

In the present example, the pivoting means are connected to that side of said panel 10 located near said post 20 which defines the respective pivoting axis, such that the opposite side of said panel 10 is able to pivot freely. In a preferred embodiment said pivoting means comprise a plurality of hinges for a stabile yet pivotable coupling of said panel 10 to said post 20.

The panel 10 is preferably made of a lightweight sandwich material such that said panel 10 is easy to handle manually by a single person. Such a panel 10 is described in EP 2,522,537 B1, which by reference is incorporated herein.

Fig. 1a further shows said post 20 extending between an upper bar 30 and a lower bar 31 substantially perpendicular thereto. Translation means are provided at said post 20, preferably at both ends of said post 20, such that said post 20 with said panel 10 pivotably connected thereto is moveable in a translation direction T parallel to said bars 30, 31. Said upper and lower bar 30, 31 define a fixed frame wherein said post 20 is allowed to translate, i.e. move. Preferably said frame is in turn fixed to a transport vehicle 2.

In an embodiment, each moveable post 20 comprises translation means at both ends of said post 20. Such translation means are for example rollers, bearing, sliders, etc., preferably designed to collaborate with a guide in said upper and lower bars 30, 31.

When loaded, for example during transport, pivoting of said panels 10 or translating of said posts 20 is undesired for safety reasons. In an embodiment said side panel construction 1 further comprises releasable securing means, which, when engaged, are arranged to prevent said panels 10 from pivoting around said pivoting axis.

Preferably translating of said posts 20 is then prevented by securing them between adjacent panels 10. The widths of said panels 10 and posts 20 are selected such that their total width corresponds to the width of said upper and lower bars 30, 31. Basically, the panels 10 and posts 20 in the closed configuration fill the entire width of the side panel construction. In the closed configuration no spacing is present between adjacent panels 10 and posts 20 preventing translating of said posts 20. Said securing means can for example comprise locking means for securing said panels 10 and or said posts to the upper bar 30, the lower bar 31, to each other, and/or to said frame.

Preferably said securing means further comprise holding means arranged to, when engaged, extend over a surface of said panel and collaborate with a protrusion for securing said panel 10 in a plane determined by said posts 20. Such holding means comprise for example locking bars or straps which can be extended across the panels 10 and attached to said upper and/or lower bars 30, 31.

Fig. 1b schematically shows a side panel construction 1 according to the invention in an open configuration, i.e. when the panels are joined together. To open side panel construction 1 the panels 10 are first pivoted out of the plane determined by said posts 20 and the upper bar 30 and the lower bar 31, in the direction indicated by the arrow P. Due to a side of each panel 10 being free, it now becomes possible to move the posts 20 in or against the direction T by means of said translation means. Preferably a guide rail is provided in said upper and/or lower bar 30, 31 to guide said translation means and thus said posts 20.

In Fig. 1b said posts 20 with said panels 10 are slid towards the right side of the construction 1. Due to the pivoting of said panels 10, the posts 20 can be positioned close to one another, i.e. in a sort of stacked position. The panels 10 do not obstruct the movement of said panels 10. Fig. 1b shows how, by sliding the posts 20, a large loading opening in said construction 1 is created. It thus becomes possible to load large objects easily into a transport vehicle 2 comprising a side panel construction 1 according to the present invention.

Advantageously changing the side panel construction 1 from the open, or joined together, configuration in Fig. 1b to the closed configuration in Fig. 1a or vice versa takes little time and can be performed by a single operator. In the closed configuration the construction 1 forms a secure protection against thieves.

For opening said construction 1, panels 10 are preferably consecutively slid towards an end of said upper and/or lower bar 30, 31, wherein for each further panel 10 that is slid towards said end the angle between said further panel 10 and said bar 30, 31 is increased with respect to said angle of the previous panel 10.

Fig. 1b illustrates the loading process of said transport vehicle, which comprises the steps of:
- providing a curtain sided transport vehicle 2 according to the present invention, having a horizontal floor for carrying load, and vertical posts 20 positioned moveably at the sides of the floor,
- sliding a removable sheet material covering said panels 10 and posts 20 towards a side of said construction 2, uncovering at least said panels 10,
- moving, preferably pivoting, one or more side panels 10 out of a plane determined by said vertical posts in a side panel construction 2 according to the present invention on said transport vehicle 2,
- sliding a first post 20 with a first panel 10 nearest an end of said bar 30, 31 (the right side in Fig. 1b) in a direction parallel to said bar 30, 31 towards said end (i.e. to the right in Fig. 1b), wherein said first panel 10 is positioned under a first angle A1 between said first panel 10 and said bar 30, 31,
- sliding a second post 20 with a second panel 10, next nearest to said end of said bar 30, 31 (the second post 20 from the right in Fig. 1b) towards said first post 20 near said end of said bar 30, 31, wherein said second panel 10 is positioned under a second angle A2 between said second panel 10 and said bar 30, 31, such that said second angle is larger than said first angle (A1 < A2),
- sliding a third post 20 with a third panel 10, third nearest to said end of said bar 30, 31 (the third post 20 from the right in Fig. 1b) towards said second post 20 near said first post 20 near said end of said bar 30, 31, wherein said third panel 10 is positioned under a third angle A3 between said third panel 10 and said bar 30, 31, such that said third angle A3 is larger than said second angle (A2 < A3)
- consecutively sliding additional posts 20 towards said end of said bar 30, 31 such that the angle An between each consecutive panel 10 and said bar 30, 31 is greater that said angle An-1 of said previous panel 10 (An-1 < An),
- loading or unloading articles onto the floor,
- sliding said posts 20 away form said end of said bars 30, 31 towards their original positions,
- pivoting said panels 10 back into said plane of said posts 20,
- covering at least the vertical posts and said panels 10 attached to said posts 20 with a removable sheet material 40, wherein the distance between adjacent vertical posts 20 is adjustable by said translation means to correspond to the width of said panel 10 or two panels 10,
- securing said sheet material 40 by means of sheet securing means, thereby also securing said panels 10.

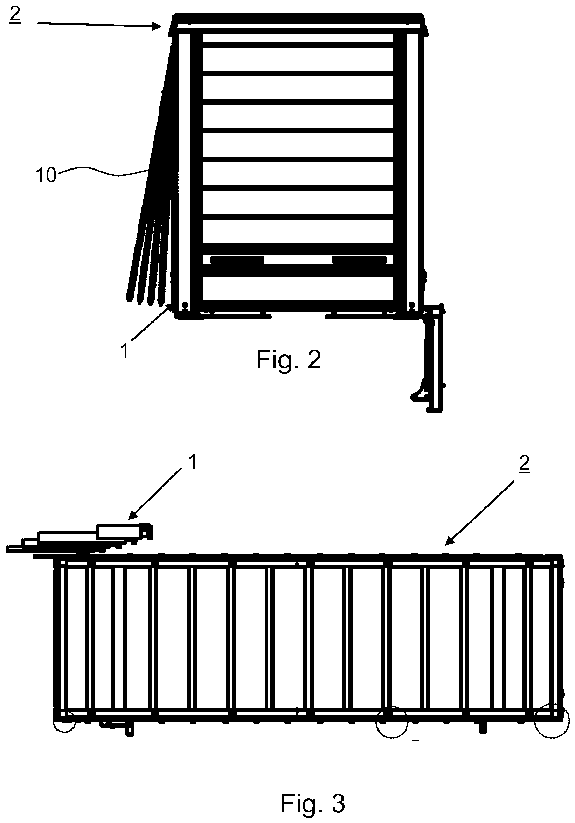

Fig. 2 schematically shows a rear view of a curtain sided transport vehicle 2 according to the present invention. A flexible or foldable sheet material 40 in the form of a curtain 40 is connected to said side panel construction 1. Said foldable curtain 40 is arranged to cover at least said panels 10 and posts 20 in a closed position of said curtain 40. Preferably said curtain 40 is moveably attached to said upper bar 30 by further translation means for moving said sheet material 40 in a direction parallel to said upper bar 30 to a open position, wherein preferably said curtain 40 is at least partially folded. Said curtain 40 can thus be slid to the side of said construction 1 similar to e.g. a shower curtain. In the closed position the curtain 40 is straightened out over said panels 10 and posts 20, while in the open position the curtain 40 is at least partially folded on a side of said construction 2. The further translation means comprise for example rollers or sliders engaged in a guide rail with attachment loops for connecting to said curtain 40.

In an example, the curtain 40 is used for securing said panels 10. In the closed position the curtain 40 is extended over said panels 10 and prevents them from pivoting away from the vehicle 2. A protrusion of further provided on either said post 20 or said panel 10, which is arranged to engage the other, such that said panel 10 is prevented from pivoting inward said transport vehicle 2. Thus the panel 10 is secured by said protrusion and said curtain 40 in the closed position. Preferably said curtain 40 in turn is secured to said transport vehicle 2 by sheet securing means, preferably to or near said floor of said vehicle 2. Such sheet securing means are in an embodiment arranged for tensioning said curtain 40 attached to said upper bar 30 across and against said panels 10. The sheet securing means can comprise strips and tensioning means for said strips, such a turn buckle or cable tie.

Figure 3 schematically shows a top view of a curtain sided transport vehicle 2 according to the present invention.

Fig. 2 illustrates the pivoting of the panels 10 around a horizontal axis defined by the bar (not shown). Each post 20 is pivotably connected to the bar 30 near the top of the vehicle 2. The bar 30 defining the horizontal pivoting axis in Fig. 2 runs perpendicular to the plane of the paper on which Fig. 2 is printed. The lower ends of the posts 20 are free ends, such that the posts and thus the panels 10 are able to pivot out of the vertical plane defined by a side face of the vehicle 2. Preferably said panels 10 are additionally pivotable around the posts 20. In this manner the panels 10 can be stored in a close packing near an end of the vehicle 2.

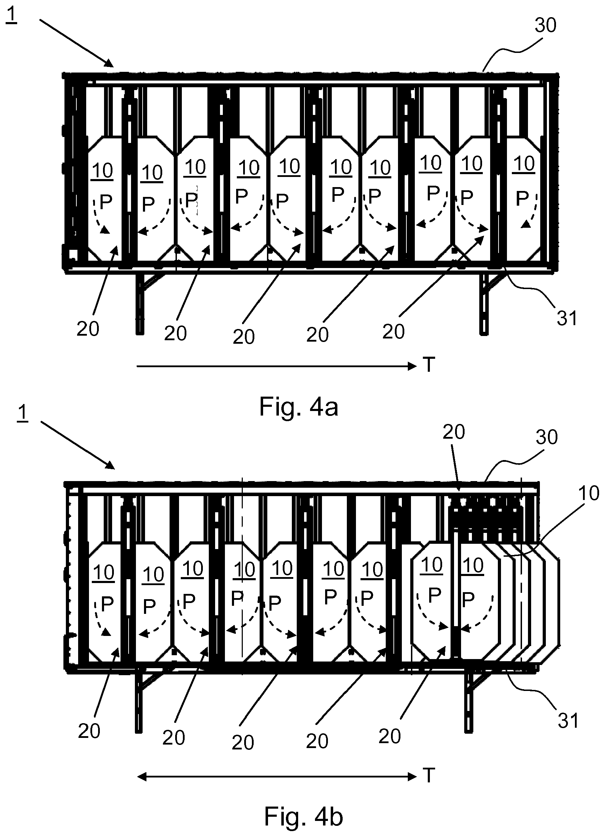

Figure 4a shows a further embodiment of a side panel construction 1 according to the present invention in a closed configuration. The construction in Fig. 4a-b is similar to the one in Fig. 1a-b. Similar features will thus not be described for the sake of brevity. The main difference between Fig. 1a-b and Fig. 4a-b are:
- two panels 10 are coupled by said coupling means to either side of said post 20;
- said panel's 10 width has been reduced with respect to Fig. 1;
- said panel 10 has been provided with recesses.

Each translatable post 20 is now pivotably connected to two panels 10 on either side of said post 20. Pivoting means for pivoting said panels 10 are also provided on either side of said post 20, such that the two parts of each of the panels 10 on each post 20 are pivotable in the same or opposite directions. In Fig. 4a more panels 10 are present in said construction 2 than in Fig. 1a-b.

Furthermore said panels 10 are provided with recesses to leave a gripping space between a side of said panel 10 and said post 20 for manual movement of said panel 10. In Fig. 4a said recesses are formed by taking away material from the corners on the free side of said panels 10. In Fig. 4a said corner has an incline but can also be rounded or any other suitable shape.

Fig. 4b shows said construction 2 of Fig. 4a wherein said panels 10 have pivoted and said posts 20 have been slid to the right side of said construction 2 in Fig. 4b. Wherein Fig. 1b one panel 10 per post is pivoted, in Fig. 4b two panels 10 are pivoted roughly around said post 20. In Fig. 4b both panels 10 on a single post 20 are pivoted in the same direction, i.e. one panel 10 pivots away from said transport vehicle 2 and the other panel 10 pivots into said vehicle 2. The consecutive sliding process with increasing angles is further similar to that described in Fig. 1b.
Fig. 4b further illustrates that a side panel construction 1 is provided on either side of said transport vehicle 2. In Fig. 4b the front panels 10 are slid to the right, while the back panels 10 are in their closed configuration.

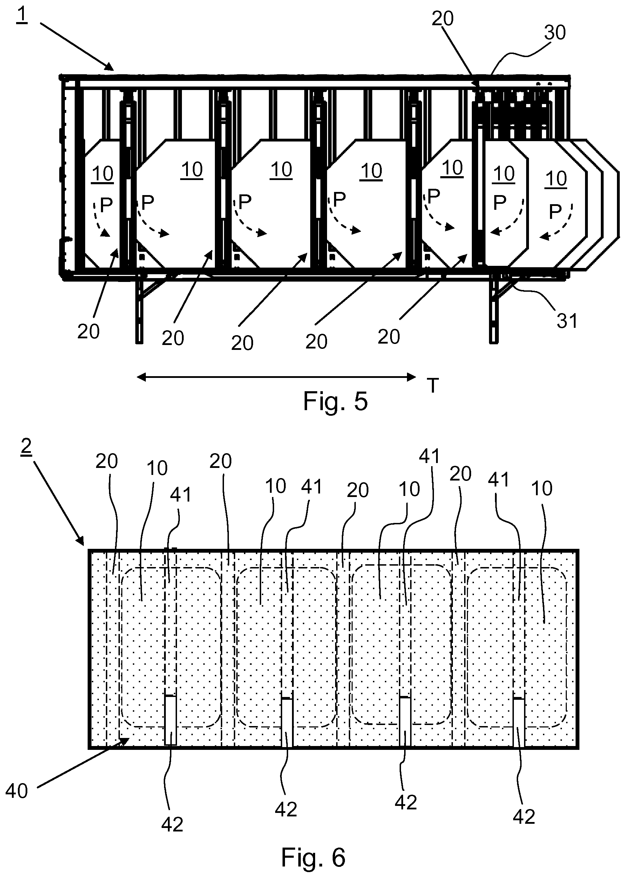

Fig. 5 shows a another embodiment of a side panel construction 2 according to the invention in an open configuration. Fig. 5 is similar to Fig. 1a-b with the exception that said panels are broader in width and provided with recesses as described in Fig. 4a-b.

Fig. 6 schematically shows a side view of a curtain sided transport vehicle 2 according to the present invention secured with sheet material 40. The sheet material 40 extends vertically over the panels 10 and posts 20 from the top to bottom of the vehicle 2. The dashed lines indicate the panels 10 and posts 20 covered by the sheet material 40. The sheet material 40 can be a curtain 40. The curtain 40 is provided on the inside (i.e. the side turned towards the panels 10) with supporting strips 41. These strips 41 are preferably longitudinal, aluminium strips attached to the curtain 40. Other strong yet lightweight materials can also be used. Near the bottom of the curtain 40 the strips 41 extend through the curtain 40 outside of the vehicle 2. These outwardly extending bottom ends 42 comprise or collaborate with sheet securing means to secure the bottom ends 42 to the lower part of the vehicle 2. In this manner the panels 10 are prevented from pivoting, while the strips 41 reinforce the curtain 40 against cargo pressing against it from inside the vehicle 2. The sheet securing means can comprise clamps, clasps and or tensioning means for quickly securing the curtain 40.

## Claims

1. Curtain sided transport vehicle (2) comprising a side panel construction (1), said side panel construction comprising a plurality of panels (10), each of which connected between two adjacent, in use substantially vertically oriented, subsequent posts (20) of the curtain sided transport vehicle, wherein said side panel construction comprises an, in use substantially horizontally oriented, bar (30; 31) from which said posts extend, and wherein said posts comprise translation means arranged for engaging said bar such that said posts are moveable in a direction parallel to said bar, **characterized in that** each of said panels are pivotable around a pivoting axis substantially parallel to at least one of its connecting posts and around a pivoting axis substantially parallel to said bar, such that said panels can be joined together by moving said posts in said direction parallel to said bar, said transport vehicle further comprising a removable sheet material (40) arranged to cover at least the sides of the curtain sided transport vehicle in a closed position, wherein said removable sheet material is provided with supporting strips (41), which, when said sheet material extends over said panels, run over said panels in between said posts substantially parallel to said posts.

2. Curtain sided transport vehicle according to claim 1, wherein each panel and/or each post further comprises releasable securing means, which, when engaged, are arranged to prevent said panel from pivoting around said pivoting axis, wherein said securing means are arranged for releasably securing said panel when said panel is located in a plane determined by said posts and said bar, wherein said securing means comprise a protrusion on a side of said post and/or said panel which prevents said panel from pivoting through said plane determined by said posts, wherein said securing means further comprise holding means arranged to, when engaged, extend over a surface of said panel and collaborate with said protrusion for securing said panel in a plane determined by said posts, and wherein said supporting strips comprise sheet securing means for, when in use, securing bottom ends (42) of said supporting strips to said transport vehicle, such that said supporting strips at least partially form said holding means for securing said panels.

3. Curtain sided transport vehicle according to any of the previous claims, wherein said removable sheet material is arranged to be translated and folded in the direction parallel to said bar, such that said sheet material can be stored in a folded state, preferably near the front or rear end of the said transport vehicle.

4. Curtain sided transport vehicle according to any of the previous claims, wherein each panel comprises two separate parts, wherein each part is connected to one of said two adjacent, in use substantially vertically oriented, subsequent posts, and wherein said two parts are arranged to be releasably secured to one another, wherein both parts are pivotable around a pivoting axis substantially parallel to its connecting post.

5. Curtain sided transport vehicle according to any of the previous claims, wherein said transport vehicle further comprises coupling means for coupling said panel between two adjacent posts, and wherein said coupling means are arranged to leave a vertical space of at least 15cm, preferably at least 25 cm, between a lower bottom of said panel and the horizontal floor.

6. Method for loading or unloading a curtain sided transport vehicle (2) according to any of the previous claims, comprising the steps of:
- providing said curtain sided transport vehicle, said vehicle comprising a horizontal floor for carrying a load,
- joining together one or more of said panels (10) by moving said posts (20) in said direction parallel to said bar (30; 31) **characterized by** pivoting said one or more panels around a pivoting axis substantially parallel to at least one of their corresponding connecting posts and around a pivoting axis substantially parallel to said bar;
- loading or unloading articles onto said floor,
- returning said joined together one or more of said panels by moving said posts in said direction parallel to said bar and by pivoting said one or more panels around a pivoting axis substantially parallel to at least one of their corresponding connecting posts and around a pivoting axis substantially parallel to said bar,
- covering at least the vertical posts and said panels attached to said posts with a removable sheet material (40), wherein a distance between adjacent vertical posts is adjustable by said translation means to correspond to the width of said panel, and
- securing the bottom ends (42) of said vertical supporting strips (41) to said transport vehicle.

7. Method according to claim 6, further comprising the step of:
- sliding said removable sheet material in the horizontal direction, such that said sheet material is stored in a folded state.

## Patentansprüche

1. Transportfahrzeug mit Planenabdeckung (2), umfassend eine Seitenwandkonstruktion (1), wobei die Seitenwandkonstruktion mehrere Wandplatten (10) umfasst, von denen jede zwischen zwei benachbarten, im Gebrauch im Wesentlichen in vertikaler Orientierung befindlichen Pfosten (20) des Transportfahrzeugs mit Planenabdeckung verbunden ist, wobei die Seitenwandkonstruktion eine im Gebrauch im Wesentlichen horizontal orientierte Stange (30; 31) umfasst, von der aus sich die Pfosten erstrecken, und wobei die Pfosten Übertragungsmittel umfassen, die angeordnet sind, um auf solche Weise an der Stange anzusetzen, dass die Pfosten in einer Richtung beweglich sind, die parallel zu der Stange ist, **dadurch gekennzeichnet, dass** jede der Wandplatten um eine Schwenkachse herum schwenkbar ist, die im Wesentlichen parallel zu mindestens einem von ihren Verbindungspfosten ist, und um eine Schwenkachse herum, die im Wesentlichen parallel zu der Stange ist, so dass die Wandplatten durch Bewegen der Pfosten in der Richtung parallel zu der Stange miteinander verbunden werden können, wobei das Transportfahrzeug ferner ein abnehmbares Planenmaterial (40) umfasst, das angeordnet ist, um mindestens die Seiten des Transportfahrzeugs mit Planenabdeckung in einer geschlossenen Position abzudecken, wobei das abnehmbare Planenmaterial mit Unterstützungsstreifen (41) versehen ist, die, wenn sich das Planenmaterial über die Wandplatten erstreckt, zwischen den Pfosten im Wesentlichen parallel zu den Pfosten über die Wandplatten verlaufen.

2. Transportfahrzeug mit Planenabdeckung nach Anspruch 1, wobei jede Wandplatte und/oder jeder Pfosten ferner lösbare Sicherungsmittel umfasst, die, wenn aktiviert, angeordnet sind, um die Wandplatte am Schwenken um die Schwenkachse herum zu hindern, wobei die Sicherungsmittel für ein lösbares Sichern der Wandplatte angeordnet sind, wenn sich die Wandplatte in einer Ebene befindet, die durch die Pfosten und die Stange bestimmt wird, wobei die Sicherungsmittel eine Vorwölbung auf einer Seite des Pfostens und/oder der Wandplatte umfassen, welche die Wandplatte am Schwenken durch die Ebene hindert, die durch die Pfosten bestimmt wird, wobei die Sicherungsmittel ferner Haltemittel umfassen, die angeordnet sind, um, wenn aktiviert, sich über eine Oberfläche der Wandplatte zu erstrecken und mit der Vorwölbung zum Sichern der Wandplatte in einer Ebene, die durch die Pfosten bestimmt wird, zusammenzuwirken, und wobei die Unterstützungsstreifen, wenn in Gebrauch, Planensicherungsmittel für das Sichern der unteren Enden (42) der Unterstützungsstreifen an dem Transportfahrzeug umfassen, so dass die Unterstützungsstreifen mindestens teilweise die Haltemittel zum Sichern der Wandplatten bilden.

3. Transportfahrzeug mit Planenabdeckung nach einem der vorangegangenen Ansprüche, wobei das abnehmbare Planenmaterial angeordnet ist, um derart in die Richtung parallel zu der Stange übertragen und gefaltet zu werden, dass das Planenmaterial in einem gefalteten Zustand, bevorzugt in der Nähe des vorderen oder hinteren Endes des Transportfahrzeugs, verstaut werden kann.

4. Transportfahrzeug mit Planenabdeckung nach einem der vorangegangenen Ansprüche, wobei jede Wandplatte zwei separate Teile umfasst, wobei jedes Teil mit einem von den zwei benachbarten, im Gebrauch im Wesentlichen vertikal orientierten, sich anschließenden Pfosten verbunden ist, und wobei die zwei Teile angeordnet sind, um lösbar gegeneinander gesichert zu werden, wobei beide Teile schwenkbar um eine Schwenkachse herum angeordnet sind, die im Wesentlichen parallel zu ihren Verbindungspfosten ist.

5. Transportfahrzeug mit Planenabdeckung nach einem der vorangegangenen Ansprüche, wobei das Transportfahrzeug ferner Kopplungsmittel zum Koppeln der Wandplatten zwischen zwei benachbarten Pfosten umfasst, und wobei die Kopplungsmittel angeordnet sind, um einen vertikalen Abstand von mindestens 15 cm, bevorzugt von mindestens 25 cm zwischen einem niedrigeren Boden der Wandplatte und dem Horizontalboden zu belassen.

6. Verfahren zum Beladen oder Entladen eines Transportfahrzeugs mit Planenabdeckung (2) nach einem der vorangegangenen Ansprüche, die folgenden Schritte umfassend:
- Bereitstellen des Transportfahrzeugs mit Planenabdeckung, wobei das Fahrzeug einen Horizontalboden zum Tragen einer Last umfasst,
- Verbinden einer oder mehrerer Wandplatten (10) durch Bewegen der Pfosten (20) in der Richtung parallel zu der Stange (30; 31), **gekennzeichnet durch** das Schwenken der einen oder mehreren Wandplatten um eine Schwenkachse herum, die im Wesentlichen parallel zu mindestens einer ihrer entsprechenden Verbindungspfosten ist, und um eine Schwenkachse herum, die im Wesentlichen parallel zu der Stange ist;
- Beladen oder Entladen von Artikeln auf den/von dem Boden,
- Rückführen der verbundenen einen oder mehreren Wandplatten durch Bewegen der Pfosten in der Richtung parallel zu der Stange und durch Schwenken der einen oder mehreren Wandplatten um eine Schwenkachse herum, die im Wesentlichen parallel zu mindestens einer ihrer entsprechenden Verbindungspfosten ist, und um eine Schwenkachse herum, die im Wesentlichen parallel zu der Stange ist,
- Abdecken mindestens der vertikalen Pfosten und der Wandplatten, die an den Pfosten befestigt sind, mit einem abnehmbaren Planenmaterial (40), wobei ein Abstand zwischen benachbarten vertikalen Pfosten mithilfe der Übertragungsmittel anpassbar ist, um mit der Breite der Wandplatte übereinzustimmen, und
- Sichern der unteren Enden (42) der vertikalen Unterstützungsstreifen (41) an dem Transportfahrzeug.

7. Verfahren nach Anspruch 6, ferner umfassend den Schritt des
- Gleitens des abnehmbaren Planenmaterials in der Horizontalrichtung derart, dass das Planenmaterial in einem gefalteten Zustand verstaut wird.

## Revendications

1. Véhicule de transport à rideaux latéraux (2) comprenant une construction de panneaux latéraux (1), ladite construction de panneaux latéraux comprenant une pluralité de panneaux (10), dont chacun est relié entre deux montants (20) subséquents adjacents, orientés essentiellement verticalement lors de l'utilisation, du véhicule de transport à rideaux latéraux, où ladite construction de panneaux latéraux comprend une barre (30 ; 31), orientée essentiellement horizontalement lors de l'utilisation, à partir de laquelle s'étendent lesdits montants, et où lesdits montants comprennent des moyens de translation agencés pour s'engager avec ladite barre de sorte que lesdits montants puissent se déplacer dans une direction parallèle à ladite barre, **caractérisé en ce que** chacun desdits panneaux peut pivoter autour d'un axe de pivotement essentiellement parallèle à au moins l'un de ses montants de liaison et autour d'un axe de pivotement essentiellement parallèle à ladite barre, de sorte que lesdits panneaux puissent être assemblés en déplaçant lesdits montants dans ladite direction parallèle à ladite barre, ledit véhicule de transport comprenant en outre un matériau en feuille amovible (40) agencé pour couvrir au moins les côtés du véhicule de transport à rideaux latéraux dans une position fermée, où ledit matériau en feuille amovible est pourvu de bandes de support (41) qui, lorsque ledit matériau en feuille s'étend sur lesdits panneaux, s'étendent sur lesdits panneaux entre lesdits montants essentiellement parallèlement auxdits montants.

2. Véhicule de transport à rideaux latéraux selon la revendication 1, dans lequel chaque panneau et/ou chaque montant comprend/comprennent en outre des moyens de fixation détachable qui, lorsqu'ils sont engagés, sont agencés pour empêcher ledit panneau de pivoter autour dudit axe de pivotement, où lesdits moyens de fixation sont agencés pour fixer de manière détachable ledit panneau lorsque ledit panneau est situé dans un plan déterminé par lesdits montants et ladite barre, où lesdits moyens de fixation comprennent une saillie sur un côté dudit montant et/ou dudit panneau qui empêche ledit panneau de pivoter à travers ledit plan déterminé par lesdits montants, où lesdits moyens de fixation comprennent en outre des moyens de maintien agencés, lorsqu'ils sont engagés, pour s'étendre sur une surface dudit panneau et coopérer avec ladite saillie pour fixer ledit panneau dans un plan déterminé par lesdits montants, et où lesdites bandes de support comprennent des moyens de fixation de feuille pour fixer, lors de l'utilisation, des extrémités inférieures (42) desdites bandes de support audit véhicule de transport, de sorte que lesdites bandes de support forment au moins partiellement lesdits moyens de maintien pour fixer lesdits panneaux.

3. Véhicule de transport à rideaux latéraux selon l'une des revendications précédentes, dans lequel ledit matériau en feuille amovible est agencé pour effectuer une translation et être plié dans la direction parallèle à ladite barre, de sorte que ledit matériau en feuille puisse être stocké dans un état plié, de préférence à proximité de l'extrémité avant ou arrière dudit véhicule de transport.

4. Véhicule de transport à rideaux latéraux selon l'une des revendications précédentes, dans lequel chaque panneau comprend deux parties séparées, où chaque partie est reliée à l'un desdits deux montants subséquents adjacents, orientés essentiellement verticalement lors de l'utilisation, et où lesdites deux parties sont agencées pour être fixées de manière détachable l'une à l'autre, où les deux parties peuvent pivoter autour d'un axe de pivotement essentiellement parallèle à son montant de liaison.

5. Véhicule de transport à rideaux latéraux selon l'une des revendications précédentes, dans lequel ledit véhicule de transport comprend en outre des moyens de couplage pour coupler ledit panneau entre deux montants adjacents, et où lesdits moyens de couplage sont agencés de manière à laisser un espace vertical d'au moins 15 cm, de préférence d'au moins 25 cm, entre un fond inférieur dudit panneau et le plancher horizontal.

6. Procédé de chargement ou de déchargement d'un véhicule de transport à rideaux latéraux (2) selon l'une des revendications précédentes, comprenant les étapes:
- fournir ledit véhicule de transport à rideaux latéraux, ledit véhicule comprenant un plancher horizontal pour porter une charge,
- assembler un ou plusieurs desdits panneaux (10) en déplaçant lesdits montants (20) dans ladite direction parallèle à ladite barre (30 ; 31), **caractérisé par** le pivotement dudit ou desdits plusieurs panneau(x) autour d'un axe de pivotement essentiellement parallèle à au moins l'un de leurs montants de liaison correspondants et autour d'un axe de pivotement essentiellement parallèle à ladite barre ;
- charger ou décharger des articles sur ledit plancher,
- renvoyer ledit ou lesdits plusieurs panneau(x) assemblé(s) desdits panneaux en déplaçant lesdits montants dans ladite direction parallèle à ladite barre et en faisant pivoter ledit ou lesdits plusieurs panneau(x) autour d'un axe de pivotement essentiellement parallèle à au moins l'un de leurs montants de liaison correspondants et autour d'un axe de pivotement essentiellement parallèle à ladite barre,
- couvrir au moins les montants verticaux et lesdits panneaux attachés auxdits montants avec un matériau en feuille amovible (40), où une distance entre des montants verticaux adjacents est réglable par lesdits moyens de translation pour correspondre à la largeur dudit panneau, et
- fixer les extrémités inférieures (42) desdites bandes de support verticales (41) audit véhicule de transport.

7. Procédé selon la revendication 6, comprenant en outre l'étape:
- faire glisser ledit matériau en feuille amovible dans la direction horizontale, de sorte que ledit matériau en feuille soit stocké dans un état plié.
